# EUROPÄISCHE PATENTANMELDUNG

(11) **EP 1 193 884 A2**
(43) Veröffentlichungstag der Anmeldung: **03.04.2002**
(21) Anmeldenummer: 01120055.7
(22) Anmeldetag: 21.08.2001
(51) Int. Cl.: H04B 1/00, H04L 12/00

(54) **Eigensicheres Feldbussystem**

(30) Priorität: 28.09.2000 DE 10049233
(71) Anmelder: Bundesr. Deutschland, vertr. d. d. Bundesministerium für Wirtschaft und Techn., vert. d. den Präs. der Physi.Tech. Bundesansta, 38116 Braunschweig (DE)
(72) Erfinder: Gerlach, Udo, Dr., 38176 Wendeburg (DE); Uehlken, Thomas, 38154 Königslutter/Gross Steinum (DE)
(74) Vertreter: Gerstein, Hans Joachim

(57) **Zusammenfassung**

Ein eigensicheres Feldbussystem (1) mit einem Feldbus (2), einer Leistungsquelle (3), einem Abschlusswiderstand (7) und mindestens einem an den Feldbus (2) angeschlossenen Feldbusgerät (4), wobei die Leistungsquelle (3) an ein erstes Ende (5) des Felsbusses (2) angeschlossen ist und der Abschlusswiderstand (7) den Feldbus (2) an dem anderen Ende (6) zur Anpassung des Wellenwiderstandes abschließt, und wobei die Leistungsquelle (3) ein periodisches Wechselsignal generiert, hat eine Reflexionsfaktorüberwachungsschaltung (9) an dem Feldbus (2) zur Bestimmung eines Größenmaßes für die zu der Leistungsquelle (3) zurückreflektierten Wellen und zur Abregelung der Leistungsquelle (3), in Abhängigkeit von dem Reflexionsfaktor.

## Beschreibung

Die Erfindung betrifft ein eigensicheres Feldbussystem mit einem Feldbus, einer Leistungsquelle, einem Abschlusswiderstand und mindestens einem an den Feldbus angeschlossenen Feldbusgerät, wobei die Leistungsquelle an ein erstes Ende des Feldbusses angeschlossen ist und der Abschlusswiderstand den Feldbus an dem anderen Ende zur Anpassung des Wellenwiderstandes abschließt, und wobei die Leistungsquelle ein periodisches Wechselsignal generiert.

Ein Feldbus ist ein serieller Energie- und ggf. Datenbus zur aufwandsarmen Ankoppelung von Feldgeräten, wie z. B. Fühlern und Stellgeräten ggf. mit peripherer Intelligenz in Prozesssteuerungs- und Überwachungsanlagen an ein zentrales Prozessleitsystem. Ein Feldbus ist leicht handhabbar und einzelne Feldkomponenten können leicht ausgetauscht werden.

Insbesondere für verfahrenstechnische Anlagen im explosionsgefährdeten Bereich sind oftmals eigensichere Feldbusse gefordert. Eine Sicherheit gegen Explosionsgefahr wird durch entsprechende Ausgestaltung der durch explosionsgefährdete Bereiche geführten Stromkreise gewährleistet.

Eine Möglichkeit zur Schaffung eines eigensicheren Feldbusses ist es, die in dem Feldbus vorhandene elektrische Energie so zu begrenzen, dass die Stromkreise in den explosionsgefährdeten Bereichen weder im Normalbetrieb noch im Störfall, z. B. bei Leerlauf oder Kurzschluss, in der Lage sind, explosionsfähige Gemische zu entzünden.

Deshalb kann nur eine relativ geringe Energie zur Versorung der Feldgeräte übertragen werden, wodurch bei einem eigensicheren Feldbus deutlich weniger Feldgeräte als bei einem herkömmlichen Feldbus im Normalbereich anschließbar sind.

Die Zahl der heute anschaltbaren Busteilnehmer an eigensichere Feldbusse ist für eine breite kostenoptimale Einführung und Nutzung der Feldbustechnik in verfahrenstechnischen Prozessanlagen noch zu gering.

Aufgabe der Erfindung war es daher, ein verbessertes eigensicheres Feldbussystem zu schaffen.

Die Aufgabe wird durch ein eigensicheres Feldbussystem mit den Merkmalen des Hauptanspruchs gelöst durch eine Reflexionsfaktorüberwachungsschaltung an dem Feldbus zur Bestimmung eines Größenmaßes für die zu der Leistungsquelle zurückreflektierten Wellen und zur Abregelung der Leistungsquelle, in Abhängigkeit von dem Reflexionsfaktor, wenn der Reflexionsfaktor eine Sollgroße überschreitet.

Leitungssysteme mit einer ein periodisches Wechselsignal generierenden Leistungsquelle, einem Abschlusswiderstand und Feldbusgeräten in Form von Zweitoren, sind grundsätzlich hinreichend bekannt und theoretisch z. B. in Michel, Hans-Jürgen: Zweitor-Analyse mit Leistungswellen. Teubner Studienbücher Elektronik, Teuber-Verlag Stuttgart, 1981, Seite 197 beschrieben. In dieser Druckschrift ist weiterhin eine Messanordnung zur Bestimmung von Reflexionsfaktoren und Übertragungsfaktoren beschrieben, um die Eigenschaften eines solchen Systems mit Hilfe von hochfrequenten Leistungswellen zu messen.

In der DE-OS 38 21 181 A1 ist eine Leistungsregelanordnung für Leistungsendstufen frequenzvariabler Sender offenbart, bei der der Verstärkungsgrad der Leistungsendstufe in Abhängigkeit von den hin- und rücklaufenden Signalen geregelt wird, um die Leistungsendstufe vor Überlastung zu schützen.

Bei der Schaffung eines verbesserten eigensicheren Feldbussystems hat sich zunächst herausgestellt, dass der eigensicher umsetzbare Leistungsumsatz durch Verwendung eines periodischen Wechselsignals anstelle der üblichen Gleichstromsignale deutlich vergrößert werden kann. Dann können aber leitungstheoretische Probleme auftreten, die die Eigensicherheit des Feldbusses stark beeinträchtigen. Aus der Leitungstheorie ist bekannt, dass durch die bei fehlangepasster Anschaltung an eine Leitung entstehenden Reflexionen durch die Überlagerung von reflektierter und von der Leistungsquelle gelieferter Leistung zur Ausbildung von lokalen Spannungs- und Stromknoten bzw. Spannungs- und Strombäuche kommen kann. Diese Überlagerungen sind in zweierlei Hinsicht problematisch:
1. Sicherheitstechnischer Aspekt: Durch die Überlagerung der vom Bus reflektierten Leistungswelle mit der vom Generator kommenden Leistungswelle kann es durch Addition beider unter bestimmten Bedingungen zu einer Überschreitung der Zündgrenzwerte kommen.
2. Funktioneller Aspekt: Bei der räumlichen Konzentration von Teilnehmern kommt es durch die konzentrierte Störung des Wellenwiderstandes zu starken Reflexionen. Diese führen zu einem starken Absinken der Spannung an der Störstelle. Die Teilnehmer versuchen durch Erhöhung ihrer Stromaufnahme ihre Leistung konstant zu halten. Hierdurch sinkt die Spannung weiter ab usw. Durch die Rückwirkung kommt es zusätzlich zum Absinken der Spannung in einem Abstand von der Hälfte der Wellenlänge der Leistungsquelle (/2) zur Störstelle.

Um nun trotz der erwähnten Probleme die Vorteile des Wechselsignals bezüglich des Leistungsumsatzes für ein eigensicheres Feldbussystem ausnutzen zu können, wird erfindungsgemäß ein reflexionsarmes System realisiert, wobei die Einhaltung des Anpassungsgrades durch eine Sicherheitsüberwachungsschaltung überprüft wird.

Hierzu ist eine Reflexionsfaktorüberwachungsschaltung vorgesehen, die zur Bestimmung eines Größenmaßes für die zu der Leistungsquelle zurückreflektierten Wellen ausgebildet ist und die Leistungsquelle abregelt, wenn der Reflexionsfaktor eine Sollgröße überschreitet. Auf diese Weise können durch Reflexionen entstehende sicherheitstechnisch kritische Zustände durch kurzzeitiges Abschalten des Feldbusses vermieden werden.

Die Reflexionsfaktorüberwachungsschaltung ist vorzugsweise zur Bestimmung des Verhältnisses der auf dem Feldbus hin- und zurücklaufenden Strom- und Spannungswellen als Maß für den
Reflexionsfaktor z. B. durch Eingangsimpedanzmessung ausgebildet.

Weiterhin wird die von der Leistungsquelle auf den Feldbus übertragenen Last anhand der an einem Abschlusswiderstand des Feldbussystems umgesetzten Leistung geregelt. Hierzu ist eine Leistungsüberwachungsschaltung zur Bestimmung der an dem Abschlusswiderstand umgesetzten Leistung als Leistungssignal und
eine Lastregelungsschaltung zur Regelung der von der Leistungsquelle auf den Feldbus übertragenen Leistung vorgesehen, wobei die Lastregelungsschaltung von dem Leistungssignal so gesteuert wird, dass die an dem Abschlusswiderstand umgesetzte Leistung einen Sollwert nicht überschreitet. Diesem Konzept liegt folgende Überlegung zugrunde:

Die auf einer reflexionsfreien Leitung verfügbare Leistung nimmt vom Leitungsanfang bis zum Leitungsabschluss stetig entsprechend der Leitungsdämpfung sowie durch die Leistungsauskopplung der Feldbusgeräte ab. Die am Abschlusswiderstand umgesetzte Leistung entspricht somit der Differenz der am Leitungsanfang eingebrachten Leistung und der von der Leitung entnommenen Leistung. Ein Überschuss an eingebrachter Leistung wird im Abschlusswiderstand des Feldbusses umgesetzt. Nunmehr wird vorgeschlagen, dass nur eine minimal erforderliche Leistung in den Feldbus eingebracht wird. Hierzu wird ein unbedingt notwendiges Minimum an Leistung definiert, das am Abschlusswiderstand ankommen muss. Aus der am Abschlusswiderstand umgesetzten Leistung wird eine Leistungsregelgröße generiert, die mit dem definierten notwendigen Minimum der am Abschlusswiderstand ankommenden Leistung verglichen wird. Das Differenzsignal wird zur Regelung der Leistungsquelle verwendet.

Besonders vorteilhaft ist es, die Feldbusgeräte über einen reflexionsfreien wellenwiderstandsmäßig richtig angepassten Strom-/Spannungskoppler an den Feldbus anzuklemmen. Dadurch ist eine An- und Abkopplung von Feldbusgeräten reflexionsarm möglich. Bei dem Strom-/Spannungskoppler wird der Strom nach dem Prinzip eines Transformators längs zu den Feldbusleitungen und die Spannung quer zu den Feldbusleitungen ausgekoppelt. Bei einem Zwei-Draht-Feldbus sind dann an mindestens einem, vorzugsweise aber an jedem der Drähte im Längszweig z. B. ein induktiver Stromwandler zur Stromauskopplung vorgesehen. Die Spannungsauskopplung kann galvanisch oder transformatorisch zwischen den Drähten im Querzweig erfolgen.

Der Strom-/Spannungskoppler beinhaltet vorzugsweise einen
Gleichrichter, dessen Ausgang an das Feldbusgerät geklemmt ist.

Die Erfindung wird nachfolgend anhand der beigefügten Zeichnung an einem Ausführungsbeispiel näher erläutert. Es zeigt:

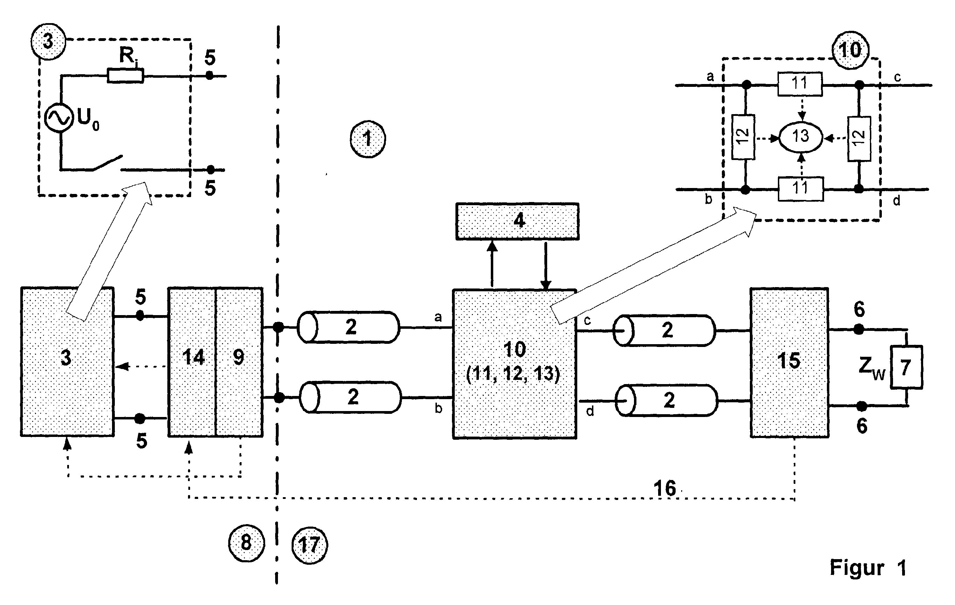

- Figur 1 -: ein Blockschaltbild eines eigensicheren Wechselbussystems mit einem Wechselsignal und einem Feldbusgerät.

Die Figur 1 lässt ein Blockschaltbild eines eigensicheren Feldbussystems 1 erkennen, das in bekannter Weise einen Feldbus 2 und eine Leistungsquelle 3 zur Energie und möglicher Datenversorgung von Feldbusgeräten 4 hat, die an den Feldbus 2 angeschlossen sind. Der Feldbus 2 ist beispielhaft als Zwei-Draht-Busleitung ausgeführt. An das erste Ende 5 des Feldbusses 2 ist die Leistungsquelle 3 und an das andere Ende 6 des Feldbusses 2 ein Abschlusswiderstand 7 angeschlossen. Der Abschlusswiderstand 7 ist so bemessen, dass der Wellenwiderstand des Feldbusses 2 im unbelasteten Zustand optimal angepasst ist.

In dem nicht explosionsgefährdeten Bereich 8 ist weiterhin eine Reflexionsfaktorüberwachungsschaltung 9 an den Feldbus 2 geklemmt. Die Reflexionsfaktorüberwachungsschaltung 9 ist zur Bestimmung des Verhältnisses der auf dem Feldbus 2 hin- und zurücklaufenden Strom- und Spannungswellen als Größenmaß für die zu der Leistungsquelle 3 zurückreflektierten Wellen, d. h. des Reflexionsfaktors ausgebildet. Die Leistungsquelle 3 wird in Abhängigkeit von dem Reflexionsfaktor abgeregelt, in dem z.B. die Leistungsquelle 3 von der Reflexionsüberwachungsschaltung 9 abgeschaltet wird, wenn der Reflexionsfaktor eine Sollgröße überschreitet. Auf diese Weise wird eine Überschreitung eines sicherheitstechnischen Grenzwertes der Ströme bzw. Spannungen auf dem Feldbus 2 sicher verhindert. Die bei Reflexion entstehenden sicherheitstechnischen Gefährdungen werden durch Abregelung der Leistungsquelle vermieden.

Die Feldbusgeräte 4 sind mit einem Strom-/Spannungskoppler 10 an den Feldbus 2 angeschlossen. Durch die Verwendung eines Strom-/Spannungskoppler 10 wird die Anpassung des Feldbussystems nur unwesentlich beeinträchtigt. Der Strom-/Spannungskoppler 10 besteht aus Stromkopplern 11, die längs zu den beiden Leitungen des Feldbusses 2 geschaltet sind und zur Stromauskopplung dienen. Zwei Spannungskoppler 12 sind quer zu den beiden Leitungen des Feldbusses 2 zur Spannungsauskopplung geschaltet. Die Stromkoppler 11 und Spannungskoppler 12 sind an einen Gleichrichter 13 geschaltet, wobei ein Feldbusgerät 4 an den Gleichrichter 13 geklemmt ist.

Zur Regelung der von der Leistungsquelle 3 auf den Feldbus 2 übertragenen Last ist eine Lastregelungsschaltung 14 vorgesehen, die von einer Leistungsüberwachungsschaltung 15 gesteuert wird. Die Leistungsüberwachungsschaltung 15 ist im Bereich des Abschlusswiderstandes 7 angeschaltet und zur Bestimmung der an dem Abschlusswiderstand 7 umgesetzten Leistung ausgebildet. Das hierbei generierte Leistungsregelungssignal 16 steuert die Lastregelungsschaltung 14.

Die Leistungsquelle 3 wird von der Lastregelungsschaltung 14 so geregelt, dass die an dem Abschlusswiderstand 7 umgesetzte Leistung einen Sollwert nicht überschreitet. Auf diese Weise wird gewährleistet, dass in den Feldbus 2 nur die unbedingt notwendige Leistung eingebracht wird.

In dem explosionsgefährdeten Bereich 17 sind ein Teil des Feldbusses 2, die Strom-/Spannungskoppler mit den zugehörigen Gleichrichtern 13 und Feldbusgeräten 4, sowie die Leistungsüberwachungsschaltung 15 und der Abschlusswiderstand 7 angeordnet. Diese Komponenten gelten gemäß der in den Normen EN 50 014, EN 50 020 und EN 50 030 für die Zündschutzart "Eigensicherheit" definierten Anforderungen an den Explosionsschutz als eigensicher und für die Anordnung im explosionsgefährdeten Bereich 17 geeignet. Die restlichen Komponenten gelten im Sinne der Norm EN 50 020 als zugehörige Betriebsmittel und sollten vorzugsweise in dem nicht explosionsgefährdeten Bereich 8 angeordnet sein.

## Patentansprüche

1. Eigensicheres Feldbussystem (1) mit einem Feldbus (2), einer Leistungsquelle (3), einem Abschlusswiderstand (7) und mindestens einem an den Feldbus (2) angeschlossenen Feldbusgerät (4), wobei die Leistungsquelle (3) an ein erstes Ende (5) des Feldbusses (2) angeschlossen ist und der Abschlusswiderstand (7) den Feldbus (2) an dem anderen Ende (6) zur Anpassung des Wellenwiderstandes abschließt, und wobei die Leistungsquelle (3) ein periodisches Wechselsignal generiert, **gekennzeichnet durch**
eine Reflexionsfaktorüberwachungsschaltung (9) an dem Feldbus (2) zur Bestimmung eines Größenmaßes für die zu der Leistungsquelle (3) zurückreflektierten Wellen und zur Abregelung der Leistungsquelle (3) in Abhängigkeit von dem Reflexionsfaktor, wenn der Reflexionsfaktor eine Sollgröße überschreitet.

2. Eigensicheres Feldbussystem (1) nach Anspruch 1, **dadurch gekennzeichnet, dass** die Reflexionsfaktorüberwachungsschaltung (9) zur Bestimmung des Verhältnisses der auf dem Feldbus (2) hin- und zurücklaufenden Strom- und Spannungswellen als Maß für den Reflexionsfaktor ausgebildet ist.

3. Eigensicheres Feldbussystem (1) nach Anspruch 1 oder 2, **gekennzeichnet durch**
eine Leistungsüberwachungsschaltung (15) zur Bestimmung der an dem Abschlusswiderstand (7) umgesetzten Leistung als Leistungsregelungssignal (16), und
eine Lastregelungsschaltung (14) zur Regelung der von der Leistungsquelle (3) auf den Feldbus (2) übertragenen Last,
wobei die Lastregelungsschaltung (14) von dem Leistungsregelungssignal (16) so gesteuert wird, dass die an dem Abschlusswiderstand (7) umgesetzte Leistung einen Sollwert nicht überschreitet.

4. Eigensicheres Feldbussystem (1) nach Anspruch 1, **dadurch gekennzeichnet, dass** die Feldbusgeräte (4) mit einem Strom-/Spannungskoppler (10) an den Feldbus (2) geklemmt sind, wobei mindestens ein Stromkoppler (11) längs zu den Feldbusleitungen zur Stromauskopplung und mindestens ein Spannungskoppler (12) quer zu den Feldbusleitungen zur Spannungsauskopplung geschaltet ist, und das Feldbusgerät (4) mit den Strom- und Spannungskopplern (11, 12) verschaltet ist.

5. Eigensicheres Feldbussystem (1) nach Anspruch 4, **gekennzeichnet durch** einen Gleichrichter (13) zwischen dem Strom-/Spannungskoppler (10) und dem Feldbusgerät (4) zur Gleichrichtung der **durch** die Strom-/Spannungskoppler (10) ausgekoppelten Strom- und Spannungssignale.
